## Europäisches Patentamt
## European Patent Office
## Office européen des brevets

(19)

(11) Publication number: **0 201 231**
**A2**

(12)

# EUROPEAN PATENT APPLICATION

(21) Application number: **86302886.6**

(22) Date of filing: **17.04.86**

(51) Int. Cl.⁴: **G 02 C 7/04**

(30) Priority: **03.05.85 US 729984**

(43) Date of publication of application: **12.11.86**
**Bulletin 86/46**

(84) Designated Contracting States: **AT BE CH DE FR GB IT LI LU NL SE**

(71) Applicant: **Holden, Brien A., 19 Leonard Avenue, Kensington New South Wales 2033 (AU)**
Applicant: **Back, Arthur, 258 Malabar Road, Maroubra New South Wales 2035 (AU)**
Applicant: **Cox, Ian, 13/55A Jersey Avenue, Mortdale New South Wales 2223 (AU)**

(71) Applicant: **Ho, Arthur, Cornea and Contact Lens Research Unit University of New South Wales P.O. Box 1, Kensington New South Wales 2033 (AU)**
Applicant: **Sayer, Grant, 14 Braeside Crescent, Earlwood New South Wales 2206 (AU)**

(72) Inventor: **Holden, Brien A., 19 Leonard Avenue, Kensington New South Wales 2033 (AU)**
Inventor: **Back, Arthur, 258 Malabar Road, Maroubra New South Wales 2035 (AU)**
Inventor: **Cox, Ian, 13/55A Jersey Avenue, Mortdale New South Wales 2223 (AU)**
Inventor: **Ho, Arthur, Cornea and Contact Lens Research Unit University of New South Wales P.O. Box 1, Kensington New South Wales 2033 (AU)**
Inventor: **Sayer, Grant, 14 Braeside Crescent, Earlwood New South Wales 2206 (AU)**

(74) Representative: **Woodcraft, David Charles et al, BROOKES & MARTIN High Holborn House 52/54 High Holborn, London, WC1V 6SE (GB)**

(54) **Method of treating presbyopia with concentric bifocal contact lenses.**

(57) Presbyopia is successfully alleviated in a person having binocular vision by a method wherein a concentric bifocal contact lens having a central distant vision zone and a peripheral near vision zone is fitted to one eye of the person and a second concentric bifocal contact lens having a central near vision zone and a peripheral distant vision is fitted to the other eye. The invention also comprises a kit containing a pair of concentric contact lenses, one lens having a central vision zone adapted to correct distant vision and a peripheral vision zone adapted to correct near vision, and the other of said lenses having a central vision zone adapted to correct near vision and a peripheral vision zone adapted to correct distant vision.

ACTORUM AG

## METHOD OF TREATING PRESBYOPIA

## WITH CONCENTRIC BIFOCAL CONTACT LENSES

This invention relates to methods of correcting presbyopic vision and more particularly to methods of correcting presbyopia by fitting of contact lenses.

Presbyopia is a condition of the aging human eye wherein the eye loses its ability to focus sharply on objects throughout the normal range of vision, i.e. from distant to near objects. This condition is the result of a gradual hardening of the crystalline lens which occurs with age and prevents the ciliary muscle from completely adjusting the curvature of the lens and thereby altering its focal length as required for viewing distant or near objects. The condition is progressive, and cannot at present be corrected by any treatment of the eye itself. Accordingly, it is conventional to provide the patient suffering from presbyopia with bifocal corrective lenses, which may be either conventional spectacle lenses or contact lenses. In such lenses, one portion of the lens is adapted to provide the proper correction, if necessary, for sharp distant vision, while another portion of the lens is adapted to provide sharp near vision. In spectacles, for example, the person using the corrective lenses directs his vision through the distant vision portion or the near vision portion as necessary.

As the crystalline lens becomes harder with advancing years, the presbyopia becomes more troublesome, and it may

0201231

be necessary to provide lenses having three different optical zones, adapted to distant, intermediate and near vision, respectively.

In the case of conventional spectacle lenses, the near vision zone is a segment generally located in the lower portion of the lens where the wearer may easily direct his/her vision through it for reading. In the case of a contact lens, it is also possible to have a near vision zone located in the lower portion of the lens. However, an alternate design for a bifocal contact lens has two concentric optic zones, a central zone and a peripheral zone, each adapted for different visual distances.

In most attempts to provide patients with lenses to compensate for presbyopia, each eye has been provided with a bifocal lens, whether spectacle lens or contact lens, designed so that the eyes are used together, each eye viewing the object through the distant vision or near vision portion as appropriate. Thus each eye sees a focussed image of the object. An alternative method of treating presbyopia has been used in recent years, wherein a contact lens focussed for near vision has been fitted to one eye and a contact lens for distant vision to the other eye (monovision). With this arrangement, one eye present a clear distant view to the brain while the other presents a clear near view. In many cases, the brain can select the desired image depending upon whether distant vision or near vision is desired, and ignore the unclear image.

This arrangement has the advantage that the patient need not shift vision from one optic zone to another, which is especially troublesome in the case of bifocal contact lenses. However, it has been found that at most thirty percent of the population can tolerate a presbyopic vision correction of this type. In the remainder of the population, the presence of the blurred image from the eye not focussed on the intended object cannot be ignored and is so distracting that the general effect is unsatisfactory correction of the presbyopic condition.

Hence, a need has continued to exist for a method of treating presbyopia by fitting optical lenses which avoid the problems described above.

The problems described above have been overcome by fitting a presbyopic person having binocular vision with concentric bifocal contact lenses wherein one eye is provided with a contact lens having a distant vision central optic zone and a near vision peripheral optic zone, and the other eye is provided with a contact lens having a near vision central optic zone and a distant vision peripheral optic zone.

Accordingly, it is an object of this invention to provide a method for correcting or alleviating the effects of presbyopia.

A further object is to provide a method for correcting presbyopia by fitting of bifocal contact lenses.

A further object is to provide a method of treating presbyopia by fitting bifocal contact lenses having concentric zones.

Further objects of the invention will become apparent from the description of the invention which follows.

BRIEF DESCRIPTION OF THE DRAWINGS

Various other objects, features and attendant advantages of the present invention will be more fully appreciated as the same becomes better understood from the following detailed description when considered in connection with the accompanying drawings, in which like reference characters designate like or corresponding parts through the several views and wherein:-

Figure 1A is an enlarged plan view of a bifocal lens, having concentric zones comprising a central distant vision optic zone, a peripheral near vision optic zone and an outermost carrier zone.

Figure 1B is an enlarged plan view of a concentric bifocal lens having a central near vision optic zone, a peripheral distant vision optic zone, and an outermost carrier zone.

Figure 2A is an enlarged cross-sectional view of a concentric bifocal lens for correction hypermetropia having a central near vision optic zone, a peripheral distance vision optic zone and an outermost carrier zone.

Figure 2B is an enlarged cross-sectional view of a concentric bifocal lens for correcting hypermetropia having a central distance vision optic zone, a peripheral

0201231

distant near optic zone carrier.

Figure 3A is an enlarged cross-sectional view of a concentric bifocal lens for correcting myopia having a central distant vision optic zone, a peripheral near vision optic zone and an outermost carrier zone.

Figure 3B is an enlarged cross-sectional view of a concentric bifocal lens for correcting myopia having a central near vision optic zone, a peripheral distant vision optic zone and an outermost carrier zone.

DETAILED DESCRIPTION OF THE

INVENTION AND PREFERRED EMBODIMENTS

It has now been discovered that the problem of intolerance for contact lenses of different focal lengths can be largely alleviated by providing each eye with a concentric bifocal contact lens wherein in one eye the central optic zone is the distant vision zone (centre distance lens) and in the other eye the central optic zone is the near vision zone (centre near lens). Presbyopic patients fitted with a pair of lenses consisting of one of each type find that they can see distant objects with both eyes but usually more clearly in the eye with the near centre lens. Near objects are also seen with both eyes, but usually more clearly in the eye with the distance centre lens. In general. there is binocular correction of both distance and near vision without the annoyance and confusion caused by the image in one eye being completely out of focus (as in monovision). This effect is achieved by the method of this invention because each lens provides some correction for both distance and near objects, one eye being biased for distance (the near centre lens) and one eye being biased for near (the distance centre lens). Concentric bifocal lenses of the type used in practising this invention provide to each of the eyes two simultaneous images, one formed by the central zone and another by the peripheral zone.

The dominant image is that formed by the zone giving a larger coverage of the pupil area. For example, if the peripheral zone covers a larger area of the pupil than the central zone, the power of the peripheral zone will be dominant in forming the image. However, either the central or the peripheral zone could be constructed to cover a larger area. If the central zone was of larger area, the focus of the central area would be dominant. The eye with the lens which has the larger zone adapted for the visual task at hand is apparently selected by the brain, and the image formed in the other eye by the smaller zone of its contact lens assists in the visual task at hand.

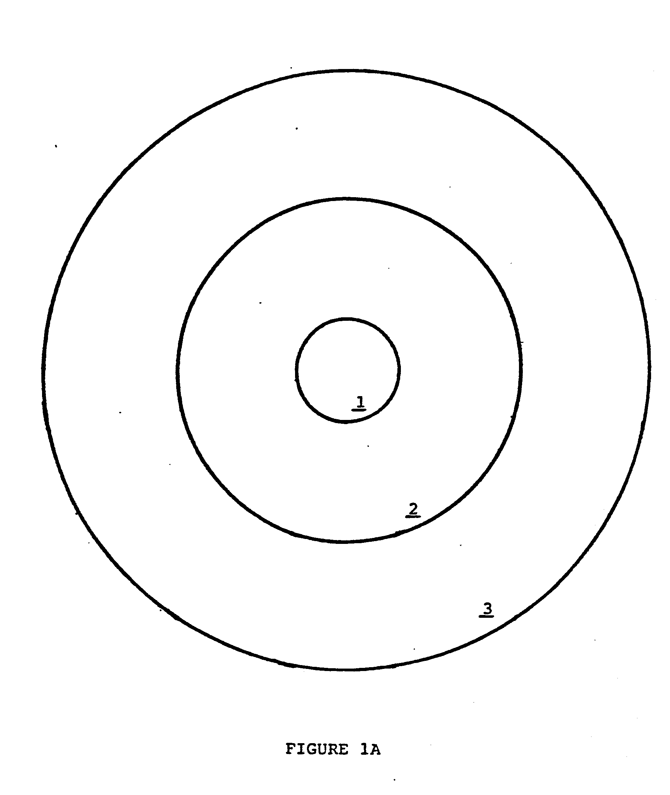

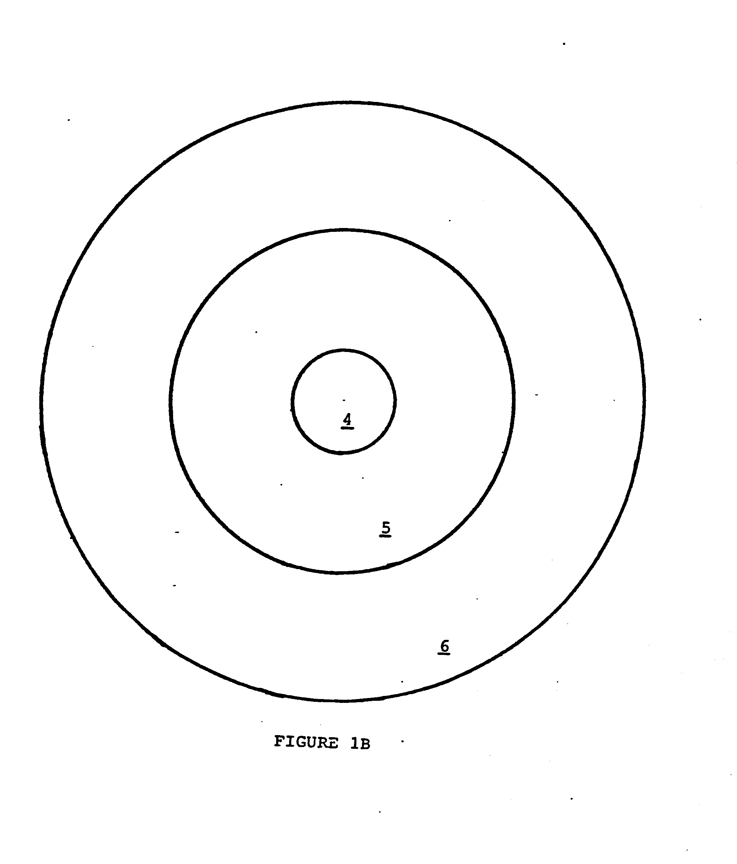

Figure 1A shows a plan view of a concentric bifocal contct lens having a central distant vision zone 1 having an optical power suitable for correcting the distant vision of the eye on which it is worn, and a peripheral near vision zone 2 surrounding the central zone and having an optical power suitable for correcting the near vision of the eye. A carrier zone 3 surrounds both optical zones to help fit the lens to the cornea of the eye. Similarly, Figure 1B shows a plan of a concentric bifocal contact lens having a central near vision zone 4, a peripheral distant vision zone 5, and a carrier zone 6.

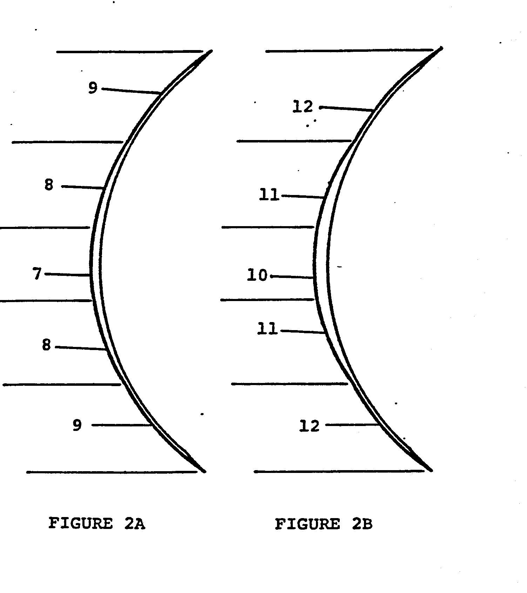

It will be understood by those skilled in the art that the optical power of each zone in the concentric bifocal lens will be determined by the particular needs of each individual. For example, Figures 2A and 2B show cross-sections of contact lenses suitable for correction of presbyopia in individuals who are hypermetropic. Figure 2A shows a cross-section of a concentric bifocal contact lens, to be worn in one eye, having a central near vision zone 7 in the eye in which it is to be worn, a peripheral distant vision zone 8, having a positive power somewhat less than that of the central zone 7 and adapted to provide sharp distant vision, and a carrier zone 9. Figure 2B shows a cross-section of the lens to be worn in the other eye, which has a central distant vision zone 10 having a positive power adapted for sharp distant vision, a peripheral near vision zone 11 having a positive power somewhat greater than the central zone 10 and adapted for sharp near vision, and a carrier zone 12.

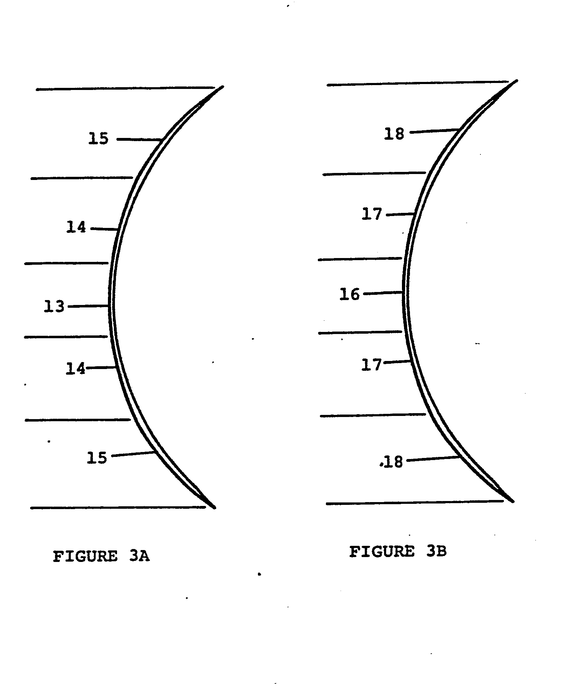

Cross-sections of concentric bifocal contact lenses suitable for practising the method of this invention in myopic individuals are shown in Figure 3A and 3B. Figure 3A shows a lens, to be worn in one eye, having a central near vision zone 13 having a negative (or positive) power adapted for sharp near vision in the eye in which it is to be worn, a peripheral distant vision zone 14, having a

0201231

negative power greater than that of the central zone 13 and adapted to provide sharp distant vision, and a carrier zone 15. Figure 3B shows a cross-section of the lens to be worn in the other eye, which has a central distant vision zone 16 having a negative power adapted for sharp distant vision, a peripheral near vision zone 17 having less negative power than the central zone 16 and adapted for sharp near vision and a carrier zone 18.

It is immaterial, in general, which of the pair of contact lenses is worn on which eye, although in a given case a wearer may have a preference. In a possible case wherein a concentric bifocal contact lens having a central distant vision zone 1 (which covers less of the pupil area) and a peripheral near vision zone 2 (which covers a greater area of the pupil) is worn in the left eye and a lens having a central near vision zone 4 (which covers a smaller area of the pupil) and a peripheral distant vision zone 5 (which covers a larger area of the pupil) is worn in the right eye, the vision correcting effect of these lenses would operate somewhat as follows. When the person observes a distant object, the right eye is presented with a clear image of the distant object provided by the peripheral zone 5 of the contact lens, and a somewhat blurred image of the object provided by the central zone 4 of the lens.

At the same time, the person's left eye receives a blurred image provided by the peripheral zone 2 of the contact lens and a sharper image provided by the central

0201231

zone 1. The presence of the sharp image from the peripheral zone 5 in the right eye provides clear distance vision and is assisted in this task by the image from the central zone 1 of the lens in the left eye. Similarly, when the person views a near object, the left eye is presented with a clear image of the near object provided by the peripheral zone 2 and a somewhat blurred image of the object provided by the central zone 1, and the right eye is presented with a clear image from the central zone 4 and a somewhat blurred image from peripheral zone 5. The brain selects the sharp images provided by the peripheral zone 2 in the left eye and the central zone 4 in the right eye, so that the individual perceives the near object clearly. In this case, the presence of the sharp image of the central zone 4 in the right eye seems to help prevent problems that would otherwise occur with a simple distance lens in that eye (monovision).

Advantages of this invention include the following:-

Compared with monovision, instead of having one pupil covered by a lens focussed for distant objects (100% distance) and the other pupil covered by a lens focussed for near objects (100% near), the percentage coverage of pupil by both optic zones (distant and near) can be adjusted in each eye.

It therefore enables both eyes to obtain visual information regarding both distant and near objects.

In practising the invention it is convenient to provide the person being treted with a kit having two containers, either separated or joined together, wherein the lenses are supplied and which serves for holding the lenses when they are not being worn. Such a kit may comprise a first container containing a first concentric bifocal contact lens having a central vision zone adapted to correc tht distant vision of one eye of a presbyopic person and a peripheral vision zone adapted to correct the near vision of that eye, and a second container, containing a second concentric bifocal contact lens having central vision zone adapted to correct the near vision of the person's other eye and a peripheral vision zone adapted to correct the distant vision of that eye.

European Patent Application No.83 306 172.4 (Publication No.0107444) describes methods (including machining and casting methods) of manufacture of bifocal contact lenses having concentric or annular zones. Such methods may be adopted for manufacture of lenses in accordance with this invention.

11                    0201231

CLAIMS

1.    A method of correcting or alleviating presbyopia in humans having binocular vision, comprising (a) fitting a first contact lens to a first eye, said first contact lens having a first optical zone adapted to provide corrected near vision for said first eye and a second zone surrounding said first zone and adapted to provide corrected distant vision for said first eye and (b) fitting a second contact lens to the other eye, said second contact lens having a first optical zone adapted to provide corrected distant vision for said second eye and a second optical zone surrounding said first zone and adapted to provide corrected near vision for said second eye.

2.    A method according to claim 1 wherein the first optical zones of said first and second lenses are adapted under normal lighting conditions to cover a smaller percentage of the areas of the respective pupils than the second zones, whereby the near vision correction is dominant in said first eye and distant vision correction is dominant in said second eye.

3.    A method according to claim 1 or claim 2 wherein said first zone is a zone centrally located in said lens.

0201231

4. A method according to any one of the preceding claims wherein the second zone is an annular zone concentrically located with respect to said first zone.

5. A method according to claim 1 wherein a further zone adapted for correcting middle distance vision is located between the first and second zones.

6. A kit for treating presbyopia in humans comprising a first container containing a first contact lens, said first contact lens being a concentric bifocal contact lens having a central optic zone adapted to correct the near vision of a first eye of a presbyopic person and a peripheral optic zone adapted to correct the distant vision of said first eye, and a second container, either attached to said first container (or separate) and containing a second contact lens, said second contact lens being a concentric bifocal contact lens having a central optic zone adapted to correct the distance vision of a second eye of said person and a peripheral optic zone adapted to correct the said near vision of said second eye.

7. A kit as claimed in claim 6 wherein the central optic zone of said first lens has greater positive (or less negative) optical power than said peripheral optic zone of

0201231

power, and said central optic zone of said second lens has less positive (or greater negative) optical power than said peripheral optic zone of said second lens has more positive or less negative power.

8. The kit of claim 6 wherein said peripheral optic zone of said first contact lens has a positive optical power and said central optic zone has more positive optical power than that of said central optic zone of said first contact lens, and said central optic zone of said second contact lens has a positive optical power and said peripheral optic zone of said second contact lens has a greater positive optical power than said central optic zone of said second contact lens.

9. The kit of claim 6 wherein said peripheral optic zone of said first contact lens has a negative optical power and said central optic zone has a less negative (or positive) optical power than that of said central optic zone of said first contact lens, and said central optic zone of said second contact lens has a negative optical power and said peripheral optic zone of said second contact lens has a less negative (or positive) optical power than that of said central optic zone of said second contact lens.

FIGURE 1A

2  0201231

FIGURE 1B

3     0201231

FIGURE 2A          FIGURE 2B

4    0201231

FIGURE 3A

FIGURE 3B